# FASCICULE DE BREVET EUROPEEN

(11) **EP 1 691 471 B1**
(45) Date de publication et mention de la délivrance du brevet: **13.08.2008**
(21) Numéro de dépôt: 05354039.9
(22) Date de dépôt: 22.11.2005
(51) Int. Cl.: H02M 1/08, H02M 7/5395

(54) **Dispositif et procédé de commande d'un inverseur**
Steuereinrichtung und Verfahren zur Steuerung eines Wechselrichters
Inverter control apparatus and method thereof

(30) Priorité: 23.12.2004 FR 0413872
(43) Date de publication de la demande: 16.08.2006
(73) Titulaire: MGE UPS Systems, 38334 Saint-Ismier Cedex (FR)
(72) Inventeur: Delarue, Philippe, 38050 Grenoble Cedex 09 (FR); Le Moigne, Philippe, 38050 Grenoble Cedex 09 (FR); Baudesson, Philippe, 38050 Grenoble Cedex 09 (FR); Bartholomeus, Patrick, 38050 Grenoble Cedex 09 (FR); Cimetiere, Xavier, 38050 Grenoble Cedex 09 (FR)
(74) Mandataire: Tripodi, Paul

(56) Documents cités:
- US-A- 5 657 216
- ESPINOZA J ET AL: "On-line generation of gating signals for current source converter topologies" INDUSTRIAL ELECTRONICS, 1993. CONFERENCE PROCEEDINGS, ISIE'93 - BUDAPEST., IEEE INTERNATIONAL SYMPOSIUM ON BUDAPEST, HUNGARY 1-3 JUNE 1993, NEW YORK, NY, USA,IEEE, US, 1 juin 1993 (1993-06-01), pages 674-678, XP010068571 ISBN: 0-7803-1227-9
- KERKMAN R J ET AL: "An overmodulation strategy for PWM voltage inverters" INDUSTRIAL ELECTRONICS, CONTROL, AND INSTRUMENTATION, 1993. PROCEEDINGS OF THE IECON '93., INTERNATIONAL CONFERENCE ON MAUI, HI, USA 15-19 NOV. 1993, NEW YORK, NY, USA,IEEE, 15 novembre 1993 (1993-11-15), pages 1215-1221, XP010109188 ISBN: 0-7803-0891-3

## Description

### DOMAINE TECHNIQUE

L'invention concerne un dispositif de commande d'un convertisseur d'énergie électrique comportant des moyens de contrôle de la conduction de bras de semi-conducteurs, ledit convertisseur d'énergie électrique comportant :
- des lignes d'alimentation de tension continue,
- des moyens de conversion ayant au moins trois bras connectés entre lesdites lignes de tension continue et des sorties pour convertir ladite tension continue en tensions alternatives de sortie, et
- des moyens de contrôle contrôlant la conduction desdits bras des moyens de conversion, lesdits moyens de contrôle comportant :

- des moyens de traitement pour fournir des signaux de modulation de signaux de commande desdits bras,
- des moyens de détermination d'une composante générale de commande pour le traitement d'une surmodulation, ladite composante générale de commande étant déterminée en fonction de premiers signaux de modulation des bras des moyens de conversion pour traiter des seconds signaux de modulation des bras des moyens de conversion,
L'invention concerne aussi un convertisseur comportant un tel dispositif de commande et un procédé de contrôle d'un tel convertisseur.

### ETAT DE LA TECHNIQUE

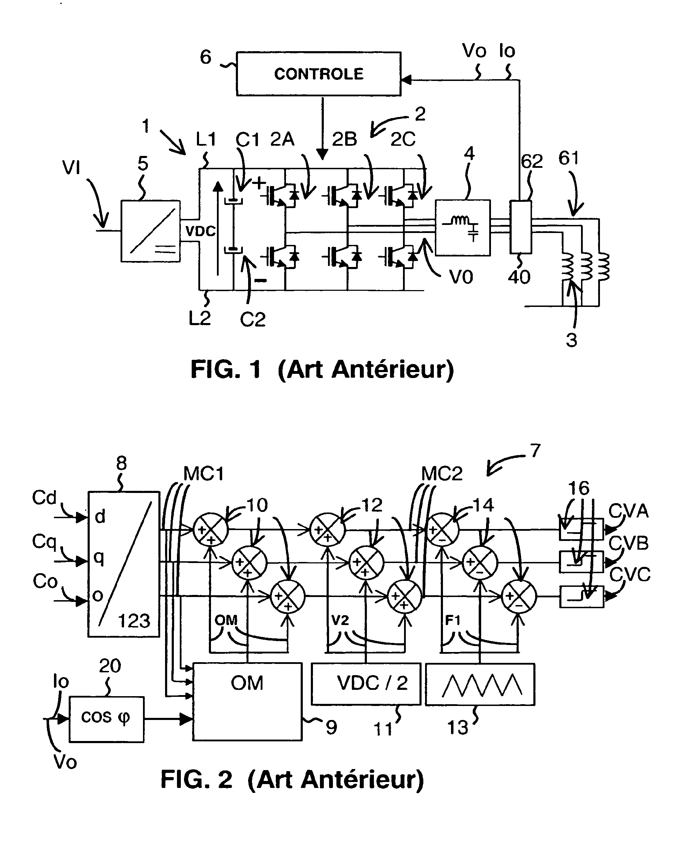

Les convertisseurs d'énergie électrique connus sont notamment utilisés dans les alimentations sans interruption, et les variateurs de vitesse pour moteurs électrique ou associés à des générateurs d'énergie pour le couplage à un réseau de distribution. Un tel convertisseur 1 représenté sur la figure 1 comporte généralement des lignes L1 et L2 de tension continue VDC et un onduleur 2 formé par des bras 2A, 2B, 2C de semi-conducteurs de puissance connectés entre les lignes L1 et L2 pour fournir en sortie des tensions alternatives VO à une charge 3 ou à un réseau de distribution électrique. Lorsque les bras sont commandés en fréquence élevée notamment en modulation de largeur d'impulsion, des filtres électriques 4 peuvent être intercalés entre les sorties des bras 2A, 2B, 2C et la charge 3 ou le réseau. Un dispositif 62 de mesure de tension et de courant disposé sur des lignes 61 de sortie fournit des signaux Vo et Io au circuit de contrôle. Souvent un redresseur 5 connecté entre des entrées VI à courant alternatif et les lignes L1 et L2 fournit la tension continue VDC. Des condensateurs C1 et C2 connectés aux lignes L1 et L2 assurent le filtrage de la tension continue VDC.

La figure 2 montre un exemple d'une partie d'une unité de traitement 7 d'un circuit de contrôle 6 pour fournir des signaux de commande des bras. Dans ce circuit, un régulateur 8 permet de réguler et de fournir des signaux de modulation triphasés en fonction de consignes réduites Cd, Cq, Co, notamment par une transformation de Park ou Concordia dans les domaines dqo ou αβo. Ces transformations et rotations connues sont calculées généralement à l'aide de matrices dites respectivement de Park et de Concordia. Des signaux MC1 pour chaque phase en sortie du régulateur sont de préférence utilisés pour une modulation de type intersective sur un signal triangulaire de porteuse haute fréquence permettant une modulation en largeur d'impulsion. Sur le schéma de la figure 2, le régulateur 8 fournit des premiers signaux MC1 de modulation triphasés, un module 9 détermine des signaux de composante générale de commande OM comportant une surmodulation à appliquer aux premiers signaux MC1 avec des opérateurs 10, un module 11 applique une tension de référence V2 audits signaux MC1 par des opérateurs 12, et un module 13 fournit un signal haute fréquence destiné à être modulé par des signaux de modulation MC2 modifiés par les opérateurs 10 et 12. Des opérateurs 14 combinent les signaux de modulation MC2 avec des signaux haute fréquence F1 de préférence triangulaire pour fournir des signaux de commande CVA, CVB et CVC des bras d'onduleur 2A, 2B, 2C au format de modulation de largeur d'impulsion. Les commandes des bras étant de préférence binaire en saturé-bloqué, un circuit de conditionnement 16 met en forme les signaux de commande. Les signaux OM de surmodulation sont générés par les signaux de modulation MC1 et par le type de surmodulation. Le signal V2 de référence est généralement représentatif d'une tension continue, par exemple de la moitié de la tension VDC des lignes L1 et L2.

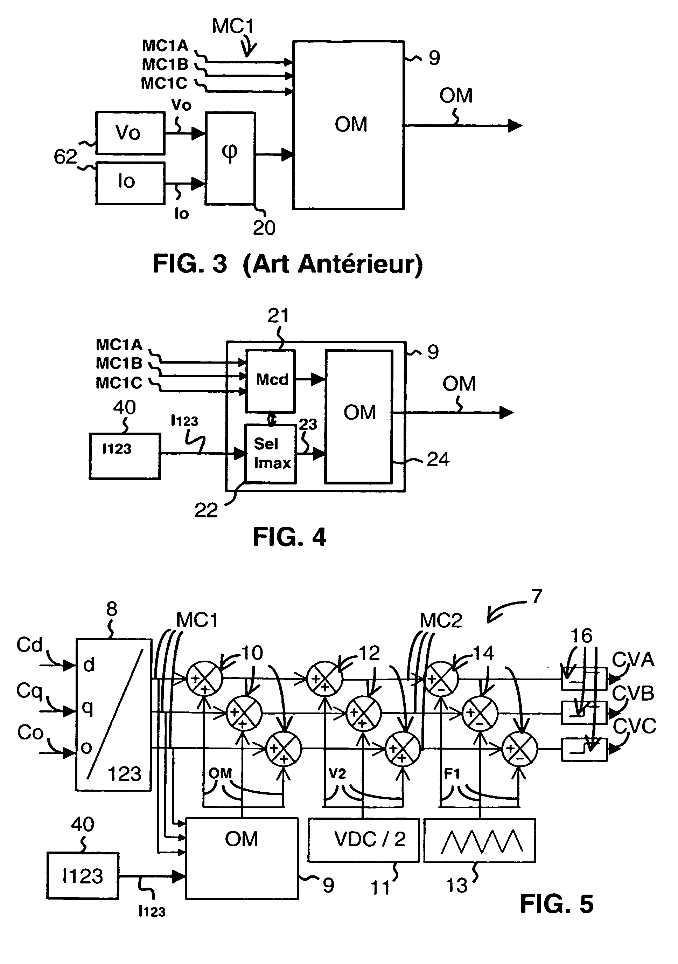

Dans des convertisseurs connus, le module 9 détermine des signaux de composante générale de commande OM en fonction de signaux MC1 de modulation et d'un signal représentatif d'un déphasage par exemple un angle ou un cosinus ϕ entre une tension Vo et un courant Io de sortie. Un exemple de module 9, représenté sur la figure 3 montre l'utilisation d'un signal représentatif de déphasage pour agir sur l'avance ou le retard du signal de composante générale de commande. Des signaux de courant Io et de tension Vo de sortie sont appliqués à un module 20 pour calculer un signal représentatif d'un déphasage qui sera fourni au module 9 de détermination de la composante générale de commande.

Dans les dispositifs connus de l'état de la technique l'utilisation de signaux représentatifs de déphasage pour déterminer la composante générale de commande ne permet pas une gestion efficace de la surmodulation. En effet, les signaux de déphasage ne sont plus utilisables lorsque les charges ne sont pas équilibrées et/ou non linéaires. Un signal de déphasage pour l'ensemble des trois phases conduit à des erreurs d'appréciation. De plus l'utilisation d'un signal de déphasage ne permet plus d'appliquer une surmodulation performante si le déphasage courant-tension dépasse une certaine valeur par exemple un angle supérieur à ±Π/6.

### EXPOSE DE L'INVENTION

L'invention a pour but un dispositif et un procédé de commande d'un convertisseur d'énergie électrique et un convertisseur comportant un tel dispositif permettant de une surmodulation efficace même avec des courants déséquilibrés, déphasés ou non linéaire.

Dans un dispositif de commande selon l'invention, lesdits moyens de détermination comportent des moyens de détection d'un signal de détection de courant circulant dans les sorties des bras dudit convertisseur pour être utilisé dans une sélection d'au moins un signal de modulation recevant une surmodulation, lesdits moyens de détermination déterminant ladite composante générale de commande en fonction des premiers signaux de modulation et en fonction dudit signal de détection détecté par les moyens de détection.

Lesdits moyens de détection détectent un premier signal de détection représentatif d'un courant le plus élevé ou le second plus élevé en valeur absolue pour fournir un premier signal de détection servant de référence de surmodulation, lesdits moyens de détermination comportant des premiers moyens de traitement pour fournir une première composante générale de commande à surmodulation dépendante dudit premier signal de détection ou d'un signal de modulation sélectionné en fonction dudit signal de détection.

De préférence, ledit signal de détection est représentatif d'une ligne de sortie ou d'une phase dans un système triphasé.

De préférence, les moyens de détection détectent ledit signal de détection en courant instantané, quasi-instantané, ou avec des signaux de courant à très faible retard ou à très faible intégration.

Avantageusement, lesdits moyens de détermination comportent des moyens de contrôle de limitation de la composante générale de commande.

De préférence, lesdits moyens de contrôle de limitation reçoivent des signaux de modulation pour fournir des valeurs de limitation négatives et positives définissant une zone de limitation.

Dans un mode de réalisation particulier, lesdits moyens de détection détectent un second signal de détection de courant élevé inférieur au premier courant le plus élevé en valeur absolue pour fournir un second signal de détection servant de référence de surmodulation, lesdits moyens de détermination comportant des seconds moyens de traitement pour fournir une seconde composante générale de commande à surmodulation dépendante dudit second signal de détection ou d'un second signal de modulation sélectionné en fonction dudit second signal de détection.

Selon une première variante, lesdits moyens de contrôle de limitation reçoivent :
- un premier signal représentatif dudit premier signal de détection ou d'un signal de modulation sélectionné en fonction dudit premier signal de détection,
- un second signal représentatif dudit second signal de détection ou d'un signal de modulation sélectionné en fonction dudit second signal de détection, et
- un signal contrôle représentatif d'un risque de dépassement de surmodulation fourni par des moyens de détection de dépassement,
lesdits moyens de contrôle de limitation fournissant un signal de détection ou de modulation sélectionné représentatif dudit premier signal de détection si un risque de dépassement n'est pas détecté ou représentatif dudit second signal de détection si un risque de dépassement est détecté pour déterminer une composante générale de commande.

Selon une seconde variante, lesdits moyens de contrôle de limitation reçoivent :
- un premier signal représentatif d'une première composante générale de commande dépendante dudit premier signal de détection,
- un second signal représentatif d'une seconde composante générale de commande dépendante dudit second signal de détection, et
- un signal de contrôle représentatif d'un risque de dépassement de surmodulation fourni par des moyens de détection de dépassement,
lesdits moyens de contrôle de limitation fournissant une composante générale de commande représentative de la première composante générale de commande si un risque de dépassement n'est pas détecté ou de la seconde composante générale de commande si un risque de dépassement est détecté.

Un convertisseur d'énergie électrique selon l'invention comportant :
- des lignes d'alimentation de tension continue,
- des moyens de conversion ayant au moins trois bras connectés entre lesdites lignes de tension continue et des sorties pour convertir ladite tension continue en tensions alternatives de sortie, et
- des moyens de contrôle contrôlant la conduction desdits bras des moyens de conversion, comporte au moins un dispositif de commande tel que défini ci-dessus et des moyens de mesure de courants disposés sur des lignes de conducteurs de sortie et connectés audit dispositif de commande pour fournir des signaux représentatifs de courants audits moyens de détermination pour être utilisés dans la détermination de la composante générale de commande.

Selon l'invention, un procédé de commande d'un convertisseur d'énergie électrique comportant :
- des moyens de conversion ayant au moins trois bras connectés entre lesdites lignes de tension continue et des sorties pour convertir ladite tension continue en tensions alternatives de sortie,
- des moyens de contrôle contrôlant la conduction des bras desdits moyens de conversion et comportant des moyens de traitement pour fournir des signaux de modulation de signaux de commande desdits bras,
comporte :
- une détection d'un signal de détection représentatif d'une ligne où circule un courant le plus élevé ou le second plus élevé en valeur absolue,
- une sélection d'un signal de modulation pour l'application d'une surmodulation,
- une détermination d'une composante générale de commande en fonction de signaux résultant de la détection dudit signal de détection, et de la sélection d'un signal de modulation.

Avantageusement, le procédé comporte un calcul de valeurs limites de la composante générale de commande ou de la surmodulation.

Avantageusement, le procédé comporte un contrôle de limitation de la composante générale de commande en fonction desdites valeurs limites.

Dans un mode de réalisation particulier, le procédé comporte :
- une première détection d'un premier signal de détection représentatif d'une ligne où circule un courant le plus élevé en valeur absolue,
- une première sélection d'un signal de modulation pour l'application d'une surmodulation,
- une première détermination d'une première composante générale de commande en fonction de signaux résultant de la première détection d'un premier signal de détection, et de la première sélection d'un signal de modulation,
- une seconde détection d'un second signal de détection représentatif d'une ligne où circule un courant élevé inférieur au premier courant le plus élevé en valeur absolue,
- une seconde sélection d'un signal de modulation pour l'application d'une surmodulation, et
- une seconde détermination d'une seconde composante générale de commande en fonction de signaux résultant de la seconde détection d'un second signal de détection, et de la seconde sélection d'un signal de modulation.

De préférence, le procédé comporte :
- un calcul de valeurs limites de la composante générale de commande ou de la surmodulation,
- un contrôle de limitation de la première composante générale de commande pour détecter un risque de dépassement des valeurs limites, et
- la fourniture d'un signal d'une composante générale de commande représentative de la première composante générale de commande si un risque de dépassement n'est pas détecté ou de la seconde composante générale de commande si un risque de dépassement est détecté.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un convertisseur de type connu ;
- la figure 2 représente un schéma bloc d'un circuit de commande d'un convertisseur de type connu ;
- la figure 3 représente un schéma bloc d'un module de détermination d'un signal de composante générale de commande de type connu ;
- la figure 4 représente un schéma bloc d'un module de détermination d'un signal de composante générale de commande selon un mode de réalisation de l'invention ;
- la figure 5 représente un schéma d'un dispositif de commande selon un mode de réalisation de l'invention ;
- la figure 6 représente un schéma d'un module de détermination de composante générale de commande selon un premier mode de réalisation de l'invention ;
- la figure 7 représente un schéma d'un module de détermination de composante générale de commande selon un second mode de réalisation de l'invention ;
- les figures 8 et 9 représentent des signaux utilisés dans des modules de détermination de composante générale de commande selon des modes de réalisation de l'invention ;
- les figures 10 et 11 représentent des détails de réalisation de modules traitement dans des modules de détermination de composante générale de commande selon des modes de réalisation de l'invention ;
- la figure 12 représente un organigramme selon un premier exemple d'un procédé selon l'invention ;
- la figure 13 représente un organigramme selon un premier exemple d'un procédé selon l'invention ;
- les figures 14A, 14B, 14C, 15A et 15B représentent des signaux utilisés dans des dispositifs de commande selon des modes de réalisation de l'invention.

### DESCRIPTION DETAILLEE DE MODES DE REALISATION PREFERES

Dans un dispositif de commande selon un mode de réalisation de l'invention, un module 9 de détermination de la composante générale de commande représenté sur la figure 4 comporte un module 21 de traitement des signaux de modulation MC1 par exemple des signaux de modulation de trois phases MC1A, MC1B et MC1C, et un module 22 de détection de signaux de courant I123 fournis par un circuit 40 de mesure pour détecter un signal de détection 23 de courant le plus élevé en valeur absolue. Cette sélection a pour objet notamment de connaître sur quelle ligne ou quelle phase le courant est le plus élevé. Ainsi, un module 24 connecté aux modules 21 et 22 détermine une valeur de la composante générale de commande OM à surmodulation avec les signaux de modulation et avec des signaux représentatifs de la ligne de sortie détectée ayant le courant le plus élevé en valeur absolue.

Sur la figure 5 un dispositif de commande d'un convertisseur d'énergie électrique selon un mode de réalisation de l'invention comporte un circuit 6 de contrôle contrôlant la conduction desdits bras 2A, 2B, 2C du convertisseur 2. Le circuit 6 de contrôle comporte une unité de traitement 7 pour fournir des signaux MC 1, MC1A, MC1B, MC1C, MC2 de modulation de signaux de commande desdits bras, et un module 9 de détermination d'une composante OM générale de commande pour le traitement d'une surmodulation. Ladite composante générale de commande OM est déterminée en fonction de premiers signaux MC1, MC1A, MC1B, MC1C de modulation des bras des moyens de conversion pour traiter des seconds signaux MC2, MC2A, MC2B, MC2C de modulation des bras du convertisseur. Dans ce dispositif selon un mode de réalisation de l'invention, le module 9 de détermination comporte un module 22 de détection d'un signal 23 détection de courant I123 circulant dans les sorties des bras dudit convertisseur pour être utilisé dans une sélection d'au moins un signal de modulation recevant une surmodulation. Le module 9 de détermination détermine ladite composante générale de commande OM en fonction des premiers signaux de modulation et en fonction dudit signal de signal 23 de détection détecté par le module 22 de détection.

Le signal de détection est de préférence représentatif d'une ligne de sortie, ou d'une phase dans un système triphasé. La détection se fait de préférence en courant instantané, quasi-instantané, ou des signaux de courant à faible retard ou à faible intégration.

Un convertisseur comporte généralement des lignes d'alimentation L1 et L2 de tension continue, un convertisseur 2 ayant au moins trois bras 2A, 2B, 2C connectés entre les lignes L1 et L2 de tension continue et des sorties pour convertir ladite tension continue en tensions alternatives VO de sortie, et un circuit 6 de contrôle contrôlant la conduction des bras 2A, 2B, 2C. Dans un mode de réalisation de l'invention, un convertisseur comporte aussi au moins un dispositif de commande tel que défini ci-dessus et des capteurs 40 de mesure de courant disposés sur des lignes 61 de conducteurs de sortie et connectés audit dispositif de commande pour fournir des signaux I123 représentatifs de courants au module 9 de détermination pour être utilisés dans la détermination de la composante générale de commande OM.

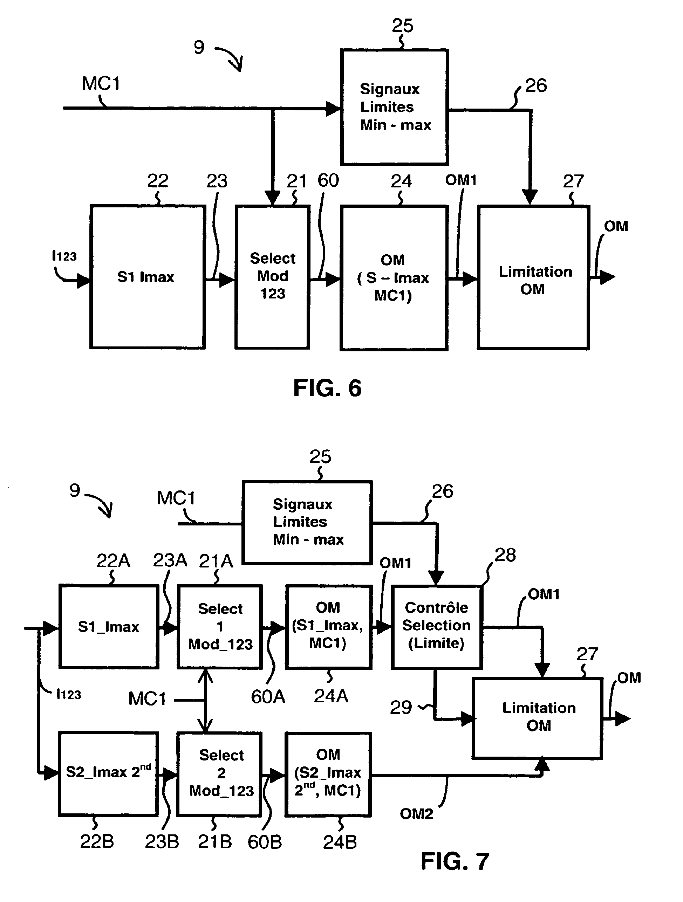

Le module de détection détecte un premier signal détection représentatif d'un courant le plus élevé en valeur absolue pour fournir un premier signal de détection servant de référence de surmodulation. Ainsi, le module de détermination 9 comporte par exemple, des modules de traitement pour fournir une première composante générale de commande OM à surmodulation dépendante dudit premier signal de détection. Un exemple, de réalisation d'un tel module est représenté sur le schéma bloc de la figure 6. Un module de détection 22 reçoit les signaux de courants I123 et détecte la ligne ou la sortie où le courant est le plus élevé. Il fournit un signal de détection 23 à un module de sélection 21 pour sélectionner un signal 60 de modulation de référence. Cette sélection peut se faire, par exemple, sous la forme de matrice ou de produit scalaire. Ensuite, un module 24 détermine un premier signal de composante générale de commande OM1 en fonction des signaux de modulation et/ou de détection.

Sur ce schéma, un module 25 de détermination de valeurs de limitation reçoit des signaux de modulation MC1 pour fournir des valeurs 26 de limitation négatives et positives définissant, par exemple, une zone de limitation. Les signaux 26 et la première composante générale de commande OM1 sont fournis à un module 27 de contrôle de limitation de la composante générale de commande. En sortie du module 27, une composante générale de commande OM est limitée sans risque de dépassement.

Pour améliorer le contrôle de la limitation, le module de détection détecte un second signal 23B de détection de courant élevé inférieur au premier courant le plus élevé en valeur absolue et fournit un second signal 60B de détection servant de référence de surmodulation. Dans ce cas, le module de détermination comporte des seconds modules de traitement pour fournir une seconde composante générale de commande à surmodulation dépendante dudit second signal de détection.

La figure 7 représente un exemple de module de détermination de composante générale de commande à deux détections de signaux de détection permettant un e surmodulation optimale. Un premier module de détection 22A reçoit les signaux de courants I123 et détecte la ligne ou la sortie où le courant est le plus élevé en valeur absolue. Il fournit un premier signal de détection 23A à un premier module de sélection 21A pour sélectionner un premier signal de modulation de référence. Ensuite, un module 24A détermine un premier signal de composante générale de commande OM1 en fonction des premiers signaux de modulation et de détection. Un second module de détection 22B reçoit les signaux de courants I123 et détecte la ligne ou la sortie où le courant est le second plus élevé en valeur absolue. Il fournit un second signal de détection 23B à un second module de sélection 21 B pour sélectionner un second signal de modulation de référence. Ensuite, un module 24B détermine un second signal de composante générale de commande OM2 en fonction des seconds signaux de modulation et de détection. Un module 25 reçoit des signaux de modulation MC1 et fournit des valeurs 26 de limitation négatives et positives définissant une zone de limitation.

Sur le schéma de la figure 7, un module 27 de contrôle de limitation de la composante générale de commande reçoit un premier signal représentatif de la première composante générale de commande OM1 dépendante dudit premier signal de détection, un second signal représentatif d'une seconde composante générale de commande OM2 dépendante dudit second signal de détection, et un signal 29 de contrôle représentatif d'un risque de dépassement de surmodulation fourni par un module 28 de détection de dépassement de surmodulation. Le module 28 de détection de dépassement permet au module 27 de contrôle de limitation de fournir une composante générale de commande OM représentative de la première composante générale de commande OM1 si un risque de dépassement n'est pas détecté ou de la seconde composante générale de commande OM2 si un risque de dépassement est détecté.

Le choix ou le remplacement de signaux pour fournir une composante de commande différente peut se faire aussi sur d'autres signaux des chaînes de traitement. Par exemple, un module 27 de contrôle de limitation de la composante générale de commande peut sélectionner un signal de détection représentatif dudit premier signal détection 23A si un risque de dépassement n'est pas détecté ou représentatif dudit second signal de détection 23B si un risque de dépassement est détecté pour déterminer une composante générale de commande OM.

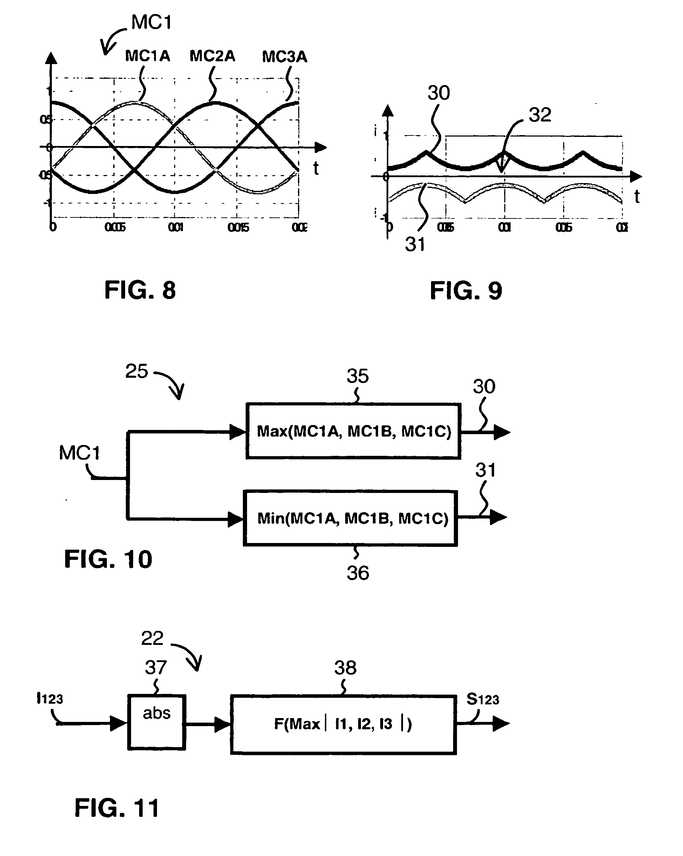

La figure 8 montre un exemple de signaux de modulation MC1, MC1A, MC1B, et MC1C normés entre -1 et +1. La figure 9 montre des exemples de signaux de limitation correspondant à un signal de limitation positive 30 et à un signal de limitation négative 31. Entre ces deux signaux une zone 32 de limitation est définie.

Un exemple de module 25 de détermination de valeurs de limitation est représenté sur la figure 10. Il comporte un premier module 35 donnant une valeur maximale positive 30 des signaux de modulation MC1A, MC1B, et MC1C et un second module 36 donnant une valeur maximale négative 31 des signaux de modulation MC1A, MC1B, et MC1C.

Un exemple de module 22 de détection est représenté sur la figure 11. Il comporte un module 37 donnant une valeur absolue des signaux de courant I123 et un module 38 donnant une indication du signal de courant maximal.

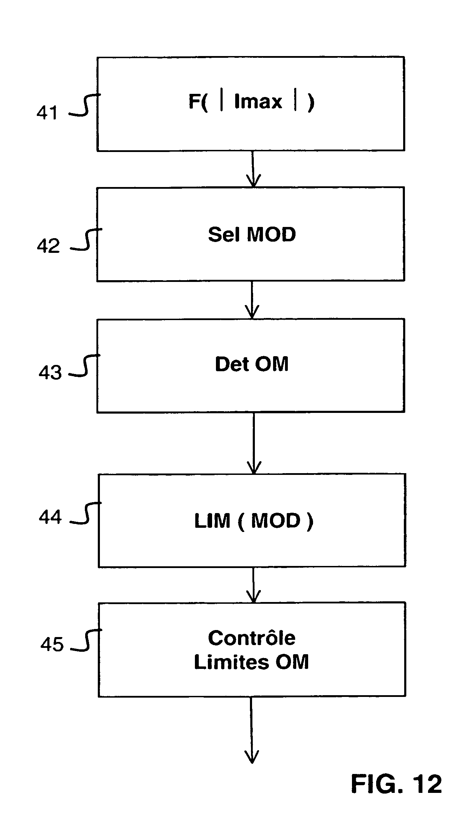

La figure 12 montre un premier procédé de commande d'un convertisseur d'énergie électrique selon un mode de réalisation de l'invention comportant un convertisseur 2 ayant au moins trois bras connectés entre des lignes de tension continue et des sorties pour convertir ladite tension continue en tensions alternatives de sortie, et un circuit de contrôle 6 contrôlant la conduction des bras du convertisseur et comportant des moyens de traitement pour fournir des signaux de modulation de signaux de commande desdits bras.

Ce procédé comporte notamment une étape 41 de détection d'un signal de détection représentatif d'un courant le plus élevé ou d'une ligne où circule un courant le plus élevé en valeur absolue et une étape 42 de sélection d'un signal de modulante pour l'application d'une surmodulation. A une étape 43, une composante générale de commande OM est déterminée en fonction de signaux résultant de la détection dudit signal de détection, et de la sélection d'un signal de modulante.

Pour éviter des risques de dépassement lors de la surmodulation, une étape 44 permet de calculer des valeurs limites de la composante générale de commande ou de la surmodulation. Puis, une étape 45 comporte un contrôle de limitation de la composante générale de commande en fonction desdites valeurs limites.

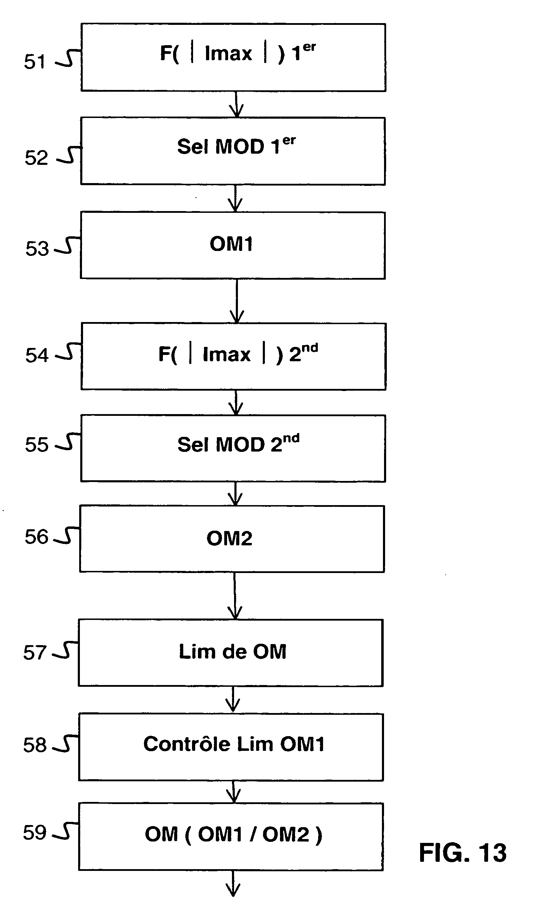

La figure 13 montre un second procédé de commande d'un convertisseur d'énergie électrique selon un mode de réalisation de l'invention. Dans ce procédé, une première étape 51 de détection détecte un premier signal de détection représentatif d'un courant le plus élevé ou d'une ligne où circule un courant le plus élevé en valeur absolue, et une première sélection sélectionne un premier signal de modulante, à une étape 52, pour l'application d'une surmodulation. A une étape 53, une première détermination d'une composante générale de commande OM1 est déterminée en fonction de signaux résultant de la première détection d'un premier signal de détection, et de la première sélection d'un signal de modulante. Une seconde étape 54 de détection détecte un second signal de détection représentatif d'un signal deuxièmement plus élevé ou une ligne où circule un courant élevé inférieur au premier courant le plus élevé en valeur absolue. Une seconde sélection, à une étape 55, sélectionne un second signal de modulante pour l'application d'une surmodulation. A une étape 56, une seconde détermination d'une seconde composante générale de commande est déterminée en fonction de signaux résultant de la seconde détection d'un second signal de détection, et de la seconde sélection d'un signal de modulante.

Ce procédé comporte un calcul de valeurs limite de la composante générale de commande ou de la surmodulation à une étape 57, et un contrôle de limitation de la première composante générale de commande pour détecter un risque de dépassement des valeurs limites à une étape 58. Puis, une étape 59 fournit un signal d'une composante générale de commande OM représentative de la première composante générale de commande OM1 si un risque de dépassement n'est pas détecté ou de la seconde composante générale de commande OM2 si un risque de dépassement est détecté.

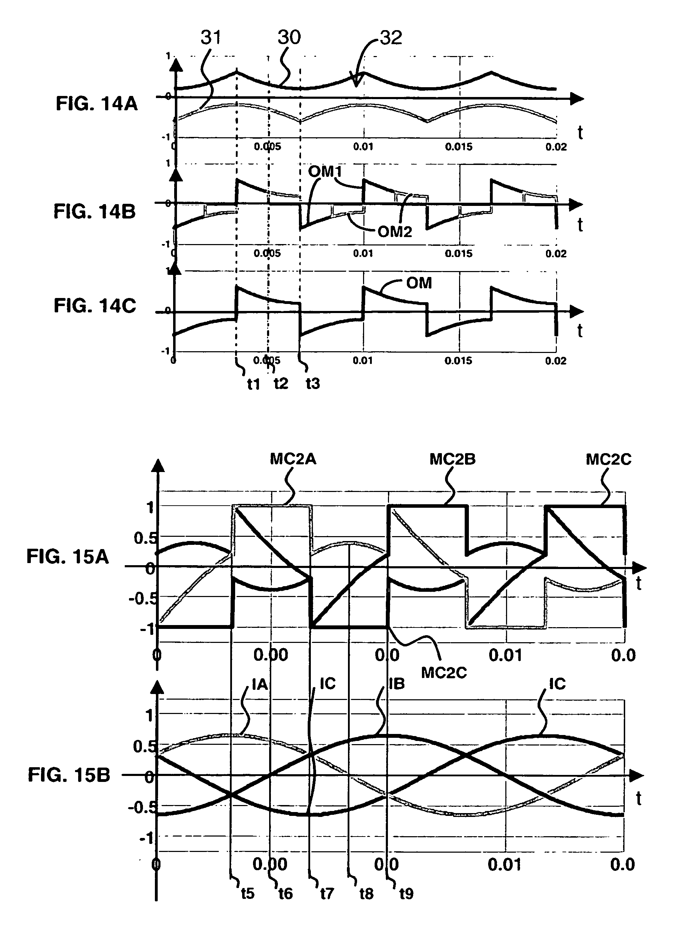

La figure 14A illustre des signaux de limitation 30 et 31 de la composante générale de commande définis en fonction des premiers signaux de modulation MC1. La figure 14B illustre des signaux des composantes générales de commande OM1 et OM2 en fonction des risques de dépassement. Ainsi, par exemple, entre les instants t1 et t2 la composante OM1 est choisie en priorité puis entre les instants t2 et t3 la composante OM2 et choisie à cause d'un risque de dépassement des limites par la composante OM1. Sur la figure 14C la composante générale de commande OM qui sera appliquée aux signaux de modulation est la résultante des composantes OM1 et OM2 sélectionnée pour une efficacité maximale et en fonction des risques de dépassement. Le fonctionnement d'un tel dispositif de commande selon un mode de réalisation de l'invention est dynamique et s'adapte en permanence à la nature et aux valeurs de courant.

La figure 15A montre des signaux de modulation MC2A, MC2B, MC2C sur lesquels une composante de commande OM est appliquée et la figure 15B montre des exemples de signaux I123 de courants IA, IB, IC mesurés sur les lignes 61 de sortie du convertisseur. Sur cette figure la surmodulation est de type "Flat top" consistant, dans ce cas, à commander des transistors des bras en conduction forcée lorsque le courant est maximal pour réduire les pertes, la régulation de tension se faisant dans les autres bras.

Sur les figures 15A et 15B, à un instant t5, le courant IA est le plus élevé et la surmodulation est sur le signal de modulation MC2A de la ligne correspondante. Puis à l'instant t6, le courant le plus élevé est le courant IC et le second courant le plus élevé est le courant IA. La surmodulation est encore sur le signal MC2A mais il correspond au second signal le plus élevé pour éviter un risque de dépassement de limite. A un instant t7, le courant le plus élevé est IC et la surmodulation passe sur le signal MC2C correspondant à la modulation du bras de la même ligne ou sortie que le courant IC. Puis à un instant, t8 le courant le plus fort est IB et le second signal le plus fort de valeur moins élevée que IB est le courant IC. Dans ce cas, pour éviter les risques de dépassement la surmodulation est sur MC2C.

Les figures montrent des signaux réguliers; mais l'invention s'applique aussi et surtout à des courants ayant des formes, des amplitudes et des déphasages qui peuvent être très différents même pour chaque phase.

Des dispositifs de conversion selon des modes de réalisation peuvent être notamment des onduleurs, alimentations sans interruption, des variateurs de vitesse, des convertisseurs d'énergie unidirectionnels ou bidirectionnels, ou des convertisseurs de fréquence.

L'invention s'applique en particulier aux convertisseurs triphasés à trois bras ou à quatre bras notamment lorsqu'un bras de neutre ou commun est utilisé, mais d'autres convertisseurs ayant un nombre différent de bras et/ou de phases peuvent être concernés.

L'invention s'applique notamment à des convertisseurs dans lesquels les bras fonctionnent à deux niveaux, mais elle s'applique aussi lorsque les bras fonctionnent à de multiples niveaux de tension de sortie.

Les semi-conducteurs de ces convertisseurs sont avantageusement des transistors à grille isolée dits IGBT mais d'autres types de semi-conducteurs peuvent être utilisés. Les bras peuvent comporter plusieurs semi-conducteurs connectés en série et/ou en parallèle en fonction des tensions, des courants ou des puissances électriques utilisées. Par exemple, les tensions d'entrée ou de sortie peuvent être de quelques dizaines de volts à mille volts pour des applications en réseaux basse tension ou avoir des tensions de plusieurs milliers de volts notamment en application moyenne tension. Les courants d'entrée ou de sortie peuvent être de quelques ampères à plus de mille ampères.

## Revendications

1. Dispositif de commande d'un convertisseur d'énergie électrique comportant des moyens de contrôle (6) de la conduction de bras (2A, 2B, 2C) de semi-conducteurs,
ledit convertisseur d'énergie électrique comportant :
- des lignes d'alimentation (L1 et L2) de tension continue,
- des moyens (2) de conversion ayant au moins trois bras (2A, 2B, 2C) connectés entre lesdites lignes (L1 et L2) de tension continue et des sorties pour convertir ladite tension continue en tensions alternatives (VO) de sortie, et
- des moyens (6) de contrôle contrôlant la conduction desdits bras (2A, 2B, 2C) des moyens de conversion (2),
lesdits moyens de contrôle comportant:
- des moyens (7) de traitement pour fournir des signaux (MC1, MC1A, MC1B, MC1C, MC2) de modulation de signaux de commande desdits bras,
- des moyens (9) de détermination d'une composante (OM) générale de commande pour le traitement d'une surmodulation, ladite composante générale de commande (OM) étant déterminée en fonction de premiers signaux (MC1A, MC1B, MC1C) de modulation des bras des moyens de conversion pour traiter des seconds signaux (MC2A, MC2B, MC2C) de modulation des bras des moyens de conversion,
dispositif de commande **caractérisé en ce que** lesdits moyens (9) de détermination comportent des moyens (22, 22A, 22B) de détection d'un signal (23, 23A, 23B) de détection représentatif d'une ligne où circule un courant le plus élevé ou le second plus élevé en valeur absolue pour être utilisé dans une sélection d'au moins un signal de modulation recevant une surmodulation, lesdits moyens de détermination déterminant ladite composante générale de commande (OM, OM1, OM2) en fonction des premiers signaux de modulation (MC1, MC1A, MC1B, MC1C) et en fonction dudit signal (23, 23A, 23B) de détection détecté par les moyens (22, 22A, 22B) de détection.

2. Dispositif selon la revendication 1 **caractérisé en ce que** ledit signal (23, 23A, 23B) de détection est représentatif d'une ligne de sortie ou d'une phase dans un système triphasé.

3. Dispositif selon l'une des revendications 1 ou 2 **caractérisé en ce que** les moyens de détection (22, 22A, 22B) détectent ledit signal (23, 23A, 23B) de détection en courant instantané, quasi-instantané, ou avec des signaux de courant à très faible retard ou à très faible intégration.

4. Dispositif selon l'une quelconques des revendications 1 à 3 **caractérisé en ce que** lesdits moyens de détection détectent un premier signal de détection (23, 23A) représentatif d'un courant le plus élevé en valeur absolue pour fournir un premier signal de détection servant de référence de surmodulation, lesdits moyens de détermination comportant des premiers moyens (21, 24, 27, 21A, 24A) de traitement pour fournir une première composante générale de commande (OM, OM1) à surmodulation dépendante dudit premier signal (23, 23A) de détection ou d'un signal de modulation (60, 60A) sélectionné en fonction dudit signal de détection.

5. Dispositif selon l'une quelconques des revendications 1 à 4 **caractérisé en ce que** lesdits moyens de détermination comportent des moyens (25, 27, 28) de contrôle de limitation de la composante générale de commande (OM).

6. Dispositif selon la revendication 5 **caractérisé en ce que** lesdits moyens de contrôle de limitation (25, 27, 28) reçoivent des signaux de modulation (MC1, MC1A, MC1B, MC1C) pour fournir des valeurs de limitation négatives (31) et positives (30) définissant une zone (32) de limitation.

7. Dispositif selon l'une des revendications 5 ou 6 **caractérisé en ce que** lesdits moyens de détection (22B) détectent un second signal (23B) de détection de courant élevé inférieur au premier courant le plus élevé en valeur absolue pour fournir un second signal de détection servant de référence de surmodulation, lesdits moyens de détermination comportant des seconds moyens de traitement (21B, 24B, 27) pour fournir une seconde composante générale de commande (OM2) à surmodulation dépendante dudit second signal (23B) de détection ou d'un second signal (60B) de modulation sélectionné en fonction dudit second (23B) signal de détection.

8. Dispositif selon la revendication 7 **caractérisé en ce que** lesdits moyens de contrôle de limitation reçoivent :
- un premier signal représentatif dudit premier signal (23A) de détection ou d'un signal de modulation (60A) sélectionné en fonction dudit premier signal (23A) de détection,
- un second signal représentatif dudit second signal (23B) de détection ou d'un signal de modulation (60B) sélectionné en fonction dudit second signal (23B) de détection, et
- un signal contrôle (29) représentatif d'un risque de dépassement de surmodulation fourni par des moyens (28) de détection de dépassement,
lesdits moyens de contrôle de limitation fournissant un signal de détection ou de modulation sélectionné représentatif dudit premier signal (23A) de détection si un risque de dépassement n'est pas détecté ou représentatif dudit second signal (23B) de détection si un risque de dépassement est détecté pour déterminer une composante générale de commande.

9. Dispositif selon la revendication 7 **caractérisé en ce que** lesdits moyens de contrôle de limitation reçoivent:
- un premier signal représentatif d'une première composante générale de commande (OM1) dépendante dudit premier signal (23A) de détection,
- un second signal représentatif d'une seconde composante générale de commande (OM2) dépendante dudit second signal de détection (23B), et
- un signal (29) de contrôle représentatif d'un risque de dépassement de surmodulation fourni par des moyens (28) de détection de dépassement,
lesdits moyens (28, 29) de contrôle de limitation fournissant une composante générale de commande (OM) représentative de la première composante générale de commande (OM1) si un risque de dépassement n'est pas détecté ou de la seconde composante générale de commande (OM2) si un risque de dépassement est détecté.

10. Convertisseur d'énergie électrique comportant :
- des lignes d'alimentation (L1 et L2) de tension continue,
- des moyens (2) de conversion ayant au moins trois bras (2A, 2B, 2C) connectés entre lesdites lignes (L1 et L2) de tension continue et des sorties pour convertir ladite tension continue en tensions alternatives (VO) de sortie, et
- des moyens (6) de contrôle contrôlant la conduction desdits bras (2A, 2B, 2C) des moyens de conversion (2),
**caractérisé en ce qu'**il comporte au moins un dispositif de commande selon l'une des revendications 1 à 9 et des moyens (40) de mesure de courants disposés sur des lignes (61) de conducteurs de sortie et connectés audit dispositif de commande (9) pour fournir des signaux (1123) représentatifs de courants audits moyens de détermination (9) pour être utilisés dans la détermination de la composante générale de commande (OM).

11. Procédé de commande d'un convertisseur d'énergie électrique comportant :
- des moyens (2) de conversion ayant au moins trois bras connectés entre lesdites lignes de tension continue et des sorties pour convertir ladite tension continue en tensions alternatives de sortie,
- des moyens (6) de contrôle contrôlant la conduction des bras desdits moyens de conversion et comportant des moyens de traitement pour fournir des signaux de modulation de signaux de commande desdits bras,
procédé **caractérisé en ce qu'**il comporte :
- une détection (41, 51, 54) d'un signal (23, 23A, 23B) de détection représentatif d'une ligne
où circule un courant le plus élevé ou le second plus élevé en valeur absolue,
- une sélection (42, 52, 55) d'un signal (60, 60A, 60B) de modulation pour l'application d'une surmodulation (OM), et
- une détermination (43, 53, 56) d'une composante générale de commande (OM, OM1, OM2) en fonction de signaux résultant de la détection dudit signal (23, 23A, 23B) de détection, et de la sélection d'un signal (60, 60A, 60B) de modulation.

12. Procédé selon la revendication 11 **caractérisé en ce qu'**il comporte un calcul (44) de valeurs limites (30, 31, 32) de la composante générale de commande (OM, OM1) ou de la surmodulation

13. Procédé selon la revendication 12 **caractérisé en ce qu'**il comporte un contrôle (45) de limitation de la composante générale de commande (OM) en fonction desdites valeurs limites (30,31,32).

14. Procédé selon l'une quelconques des revendications 11 à 13 **caractérisé en ce qu'**il comporte :
- une première détection (51) d'un premier signal (23A) de détection représentatif d'une ligne où circule un courant le plus élevé en valeur absolue,
- une première sélection (52) d'un signal (60A) de modulation pour l'application d'une surmodulation,
- une première détermination (53) d'une première composante générale de commande (OM1) en fonction de signaux (23A, 60A) résultant de la première détection d'un premier signal de détection, et de la première sélection d'un signal de modulation,
- une seconde détection (54) d'un second signal de détection (23B) représentatif d'une ligne où circule un courant élevé inférieur au premier courant le plus élevé en valeur absolue,
- une seconde sélection (55) d'un signal (60B) de modulation pour l'application d'une surmodulation, et
- une seconde détermination (56) d'une seconde composante générale de commande (OM2) en fonction de signaux (23B, 60B) résultant de la seconde détection d'un second signal de détection, et de la seconde sélection d'un signal de modulation.

15. Procédé selon la revendication 14 **caractérisé en ce qu'**il comporte :
- un calcul (57) de valeurs limites de la composante générale de commande ou de la surmodulation,
- un contrôle (58) de limitation de la première composante générale de commande pour détecter un risque de dépassement des valeurs limites, et
- la fourniture (59) d'un signal d'une composante générale de commande (OM) représentative de la première composante générale (OM1) de commande si un risque de dépassement n'est pas détecté ou de la seconde composante générale (OM2) de commande si un risque de dépassement est détecté.

## Claims

1. A device for control of an electric power converter comprising control means (6) controlling turn-on of semi-conductor arms (2A, 2B, 2C),
said electric power converter comprising:
- DC voltage supply lines (L1 and L2),
- conversion means (2) having at least three arms (2A, 2B, 2C) connected between said DC voltage supply lines (L1 and L2) and outputs to convert said DC voltage into output AC voltages (VO), and
- control means (6) controlling turn-on of said arms (2A, 2B, 2C) of the conversion means (2),
said control means comprising:
- processing means (7) to supply modulation signals (MC1, MC1A, MC1B, MC1C, MC2) of control signals of said arms,
- means (9) for determining a general control component (OM) for processing an over-modulation, said general control component (OM) being determined according to first modulation signals (MC1, MC1A, MC1B, MC1C) of the arms of the conversion means to process second modulation signals (MC2A, MC2B, MC2C) of the arms of the conversion means,
a control device **characterized in that** said means (9) for determining comprise means (22, 22A, 22B) for detecting a detection signal (23, 23A, 23B) representative of a line where a highest current or second highest current in absolute current value (1123) is flowing in the outputs of the arms of said converter to be used in selection of at least one modulation signal receiving an over-modulation, said means for determining determining said general control component (OM, OM1, OM2) according to the first modulation signals (MC1, MC1A, MC1B, MC1C) and according to said detection signal (23, 23A, 23B) detected by the means for detecting (22, 22A, 22B).

2. The device according to claim 1 **characterized in that** said detection signal (23, 23A, 23B) is representative of an output line or of a phase in a three-phase system.

3. The device according to one of claims 1 or 2 **characterized in that** the means for detecting (22, 22A, 22B) detect said detection signal (23, 23A, 23B) in instantaneous current, quasi-instantaneous current, or with current signals with a very small lag or a very low integration.

4. The device according to any one of claims 1 to 3 **characterized in that** said means for detecting detect a first detection signal (23, 23A) representative of a highest current in absolute value to supply a first detection signal acting as over-modulation reference, said means for determining comprising first processing means (21, 24, 27, 21A, 24A) to supply a first general control component (OM, OM1) with over-modulation dependent on said first detection signal (23, 23A) or on a modulation signal (60, 60A) selected according to said detection signal.

5. The device according to any one of claims 1 to 4 **characterized in that** said means for determining comprise means (25, 27, 28) for controlling limiting of the general control component (OM).

6. The device according to claim 5 **characterized in that** said means for controlling limiting (25, 27, 28) receive modulation signals (MC1, MC1A, MC1B, MC1C) to supply negative (31) and positive (30) limiting values defining a limiting zone (32).

7. The device according to one of claims 5 or 6 **characterized in that** said means for detecting (22B) detect a second detection signal (23B) of a high current lower than the first highest current in absolute value to supply a second detection signal acting as over-modulation reference, said means for determining comprising second processing means (21 B, 24B, 27) to supply a second general control component (OM2) with over-modulation dependent on said second detection signal (23B) or on a second modulation signal (60B) selected according to said second detection signal (23B).

8. The device according to claim 7 **characterized in that** said means for controlling limiting receive:
- a first signal representative of said first detection signal (23A) or of a modulation signal (60A) selected according to said first detection signal (23A),
- a second signal representative of said second detection signal (23B) or of a modulation signal (60B) selected according to said second detection signal (23B), and
- a control signal (29) representative of a risk of over-modulation overshoot supplied by means (28) for detecting an overshoot,
said means for controlling limiting supplying a selected detection or modulation signal representative of said first detection signal (23A) if a risk of overshoot is not detected or representative of said second detection signal (23B) if a risk of overshoot is detected to determine a general control component.

9. The device according to claim 7 **characterized in that** said means for controlling limiting receive:
- a first signal representative of a first general control component (OM1) dependent on said first detection signal (23A),
- a second signal representative of a second general control component (OM2) dependent on said second detection signal (23B), and
- a control signal (29) representative of a risk of over-modulation overshoot supplied by means (28) for detecting an overshoot,
said means (28, 29) for controlling limiting supplying a general control component (OM) representative of the first general control component (OM1) if a risk of overshoot is not detected or of the second general control component (OM2) if a risk of overshoot is detected.

10. An electric power converter comprising:
- DC voltage supply lines (L1 and L2),
- conversion means (2) having at least three arms (2A, 2B, 2C) connected between said DC voltage supply lines (L1 and L2) and outputs to convert said DC voltage into output AC voltages (VO), and
- control means (6) controlling turn-on of said arms (2A, 2B, 2C) of the conversion means (2),
**characterized in that** it comprises at least one control device according to one of claims 1 to 9 and current measuring means (40) arranged on output conductor lines (61) and connected to said control device (6) to supply signals (I123) representative of currents to said means (9) for determining to be used in determining the general control component (OM).

11. A method for controlling an electric power converter comprising:
- conversion means (2) having at least three arms connected between said DC voltage lines and outputs to convert said DC voltage into output AC voltages,
- control means (6) controlling turn-on of the arms of said conversion means and comprising processing means to supply modulation signals of control signals of said arms,
a method **characterized in that** it comprises:
- detection (41, 51, 54) of a detection signal (23, 23A, 23B) representative of a line where a highest current or second highest current in absolute value is flowing,
- selection (42, 52, 55) of a modulation signal (60, 60A, 60B) for application of an over-modulation (OM), and
- determination (43, 53, 56) of a general control component (OM, OM1, OM2) according to signals resulting from detection of said detection signal (23, 23A, 23B), and from selection of a modulation signal (60, 60A, 60B).

12. The method according to claim 11 **characterized in that** it comprises computation (44) of limit values (30, 31, 32) of the general control component (OM, OM1) or of over-modulation

13. The method according to claim 12 **characterized in that** it comprises control (45) of limiting of the general control component (OM) according to said limit values (30, 31, 32).

14. The method according to any one of claims 11 to 13 **characterized in that** it comprises:
- a first detection (51) of a first detection signal (23A) representative of a line where a highest current in absolute value is flowing,
- a first selection (52) of a modulation signal (60A) for application of an over-modulation,
- a first determination (53) of a first general control component (OM1) according to signals (23A, 60A) resulting from the first detection of a first detection signal, and from the first selection of a modulation signal,
- a second detection (54) of a second detection signal (23B) representative of a line where a high current lower than the first highest current in absolute value is flowing,
- a second selection (55) of a modulation signal (60B) for application of an over-modulation, and
- a second determination (56) of a second general control component (OM2) according to signals (23B, 60B) resulting from the second detection of a second detection signal, and from the second selection of a modulation signal.

15. The method according to claim 14 **characterized in that** it comprises:
- computation (57) of limit values of the general control component or of over-modulation,
- control (58) of limiting of the first general control component to detect a risk of overshoot of the limit values, and
- supply (59) of a signal of a general control component (OM) representative of the first general control component (OM1) if a risk of overshoot is not detected or of the second general control component (OM2) if a risk of overshoot is detected.

## Patentansprüche

1. Steuerungseinrichtung für elektrischen Energiewandler mit Steuerungsmitteln (6) zur Steuerung der Stromleitung von Halbleiterzweigen (2A, 2B, 2C),
welcher elektrische Energiewandler
- Gleichspannungs-Stromversorgungsleitungen (L1 und L2),
- Umrichtmittel (2) mit mindestens drei zwischen die genannten Gleichspannungsleitungen (L1 und L2) und Ausgänge geschalteten Zweigen (2A, 2B, 2C) zur Umwandlung der genannten Gleichspannung in Ausgangs-Wechselspannungen (VO) sowie
- Steuermittel (6) zur Steuerung der Stromleitung der genannten Zweige (2A, 2B, 2C) der Umrichtmittel (2) umfasst,
welche Steuermittel
- Verarbeitungsmittel (7) zur Lieferung von Modulationssignalen (MC1, MC1A, MC1B, MC1C, MC2) zur Modulation von die genannten Zweige ansteuernden Steuersignalen,
- Bestimmungsmittel (9) zur Bestimmung einer allgemeinen Steuerungssignalkomponente (OM) zur Verarbeitung einer Übermodulation, welche allgemeine Steuerungssignalkomponente (OM) in Abhängigkeit von ersten Modulationssignalen (MC1A, MC1B, MC1C) der Zweige der Umrichtmittel bestimmt wird, um zweite Modulationssignale (MC2A, MC2B, MC2C) der Zweige der Umrichtmittel zu verarbeiten,
welche Steuerungseinrichtung **dadurch gekennzeichnet ist, dass** die genannten Bestimmungsmittel (9) Detektionsmittel (22, 22A, 22B) zur Erkennung eines Detektionssignals (23, 23A, 23B) umfassen, welches Signal eine Leitung abbildet, die von einem als Absolutwert gemessenen höchsten oder zweithöchsten Strom durchflossen wird, und zur Auswahl mindestens eines, mit einer Übermodulation zu beaufschlagenden Modulationssignals dient, wobei die genannten Bestimmungsmittel die genannte allgemeine Steuerungssignalkomponente (OM, OM1, OM2) in Abhängigkeit von den ersten Modulationssignalen (MC1, MC1A, MC1B, MC1C) sowie vom genannten, durch die Detektionsmittel (22, 22A, 22B) erkannten Detektionssignal (23, 23A, 23B) bestimmen.

2. Einrichtung nach Anspruch 1, **dadurch gekennzeichnet, dass** das genannte Detektionssignal (23, 23A, 23B) eine Ausgangsleitung oder eine Phase eines Dreiphasensystems abbildet.

3. Einrichtung nach einem der Ansprüche 1 oder 2, **dadurch gekennzeichnet, dass** die Detektionsmittel (22, 22A, 22B) das genannte Detektionssignal (23, 23A, 23B) als unverzögertes Stromsignal, als quasi-unverzögertes Stromsignal oder als Stromsignale mit sehr kurzer Verzögerungs- bzw. sehr kurzer Integrationszeit erkennen.

4. Einrichtung nach irgendeinem der Ansprüche 1 bis 3, **dadurch gekennzeichnet, dass** die genannten Detektionsmittel ein erstes Detektionssignal (23, 23A) erkennen, das einen höchsten Strom-Absolutwert abbildet, um ein erstes, als Übermodulations-Referenzwert dienendes Detektionssignal zu liefern, wobei die genannten Bestimmungsmittel erste Verarbeitungsmittel (21, 24, 27, 21A, 24A) zur Lieferung einer ersten allgemeinen Steuerungssignalkomponente (OM, OM1) zur Übermodulation in Abhängigkeit vom genannten ersten Detektionssignal (23, 23A) oder von einem in Abhängigkeit vom genannten Detektionssignal gewählten Modulationssignal (60, 60A) umfassen.

5. Einrichtung nach irgendeinem der Ansprüche 1 bis 4, **dadurch gekennzeichnet, dass** die genannten Bestimmungsmittel Begrenzungssteuerungsmittel (25, 27, 28) zur Begrenzung der allgemeinen Steuerungssignalkomponente (OM) umfassen.

6. Einrichtung nach Anspruch 5, **dadurch gekennzeichnet, dass** die genannten Begrenzungssteuerungsmittel (25, 27, 28) mit Modulationssignalen (MC1, MC1A, MC1B, MC1C) beaufschlagt werden, um negative Begrenzungssignale (31) und positive Begrenzungssignale (30) zu liefern, die einen Begrenzungsbereich (32) definieren.

7. Einrichtung nach irgendeinem der Ansprüche 5 oder 6, **dadurch gekennzeichnet, dass** die genannten Detektionsmittel (22B) ein zweites Detektionssignal (23B) erkennen, das einen unter dem ersten höchsten Strom liegenden hohen Strom-Absolutwert abbildet, um ein als Übermodulations-Referenzwert dienendes zweites Detektionssignal zu liefern,
wobei die genannten Bestimmungsmittel zweite Verarbeitungsmittel (21B, 24B, 27) zur Lieferung einer zweiten allgemeinen Steuerungssignalkomponente (OM2) zur Übermodulation in Abhängigkeit vom genannten zweiten Detektionssignal (23B) oder von einem in Abhängigkeit vom genannten zweiten Detektionssignal (23B) gewählten zweiten Modulationssignal (60B) umfassen.

8. Einrichtung nach Anspruch 7, **dadurch gekennzeichnet, dass** die genannten Begrenzungssteuerungsmittel
- mit einem ersten Signal, welches das genannte erste Detektionssignal (23A) oder ein in Abhängigkeit vom genannten ersten Detektionssignal (23A) gewähltes Modulationssignal (60A) abbildet,
- mit einem zweiten Signal, welches das genannte zweite Detektionssignal (23B) oder ein in Abhängigkeit vom genannten zweiten Detektionssignal (23B) gewähltes Modulationssignal (60B) abbildet, sowie
- mit einem Steuersignal (29) beaufschlagt werden, das die Gefahr einer Übermodulations-Überschreitung abbildet und von Detektionsmitteln (28) zur Erkennung einer Überschreitung geliefert wird,
wobei die genannten Begrenzungssteuerungsmittel zur Bestimmung einer allgemeinen Steuerungssignalkomponente ein Detektionssignal oder ein ausgewähltes Modulationssignal liefern, welches das genannte erste Detektionssignal (23A) abbildet, wenn keine Gefahr einer Überschreitung erkannt wird, bzw. das genannte zweite Detektionssignal (23B) abbildet, wenn die Gefahr einer Überschreitung erkannt wird.

9. Einrichtung nach Anspruch 7, **dadurch gekennzeichnet, dass** die genannten Begrenzungssteuerungsmittel
- mit einem ersten Signal, welches eine erste allgemeine Steuerungssignalkomponente (OM1) abbildet, die vom genannten ersten Detektionssignal (23A) abhängt,
- mit einem zweiten Signal, welches eine zweite allgemeine Steuerungssignalkomponente (OM2) abbildet, die vom genannten zweiten Detektionssignal (23B) abhängt, sowie
- mit einem Steuersignal (29) beaufschlagt wird, das die Gefahr einer drohenden Übermodulations-Überschreitung abbildet und von Detektionsmitteln (28) zur Erkennung einer Überschreitung geliefert wird,
wobei die genannten Begrenzungssteuerungsmittel (28, 29) eine allgemeine Steuerungssignalkomponente (OM) liefern, welche die erste allgemeine Steuerungssignalkomponente (OM1) abbildet, wenn keine Gefahr einer Überschreitung erkannt wird, bzw. die zweite allgemeine Steuerungssignalkomponente (OM2) abbildet, wenn die Gefahr einer Überschreitung erkannt wird.

10. Elektrischer Energiewandler mit
- Gleichspannungs-Stromversorgungsleitungen (L1 und L2),
- Umrichtmitteln (2) mit mindestens drei zwischen die genannten Gleichspannungsleitungen (L1 und L2) und Ausgänge geschalteten Zweigen (2A, 2B, 2C) zur Umwandlung der genannten Gleichspannung in Ausgangs-Wechselspannungen (VO) sowie mit
- Steuermitteln (6) zur Steuerung der Stromleitung der genannten Zweige (2A, 2B, 2C) der Umrichtmittel (2),
**dadurch gekennzeichnet, dass** er mindestens eine Steuerungseinrichtung nach einem der Ansprüche 1 bis 9 sowie Strommessmittel (40) umfasst, die in Ausgangsleitungen (61) geschaltet und mit der genannten Steuerungseinrichtung (9) verbunden sind, um Ströme abbildende Signale (1123) an die genannten Bestimmungsmittel (9) zu liefern, die zur Bestimmung der allgemeinen Steuerungssignalkomponente (OM) verwendet werden.

11. Steuerungsverfahren für einen elektrischen Energiewandler, der
- Umrichtmittel (2) mit mindestens drei zwischen die genannten Gleichspannungsleitungen (L1 und L2) und Ausgänge geschalteten Zweigen (2A, 2B, 2C) zur Umwandlung der genannten Gleichspannung in Ausgangs-Wechselspannungen (VO) sowie
- Steuerungsmittel (6) zur Steuerung der Stromleitung in den Zweigen der genannten Umrichtmittel umfasst, welche Steuerungsmittel Verarbeitungsmittel zur Lieferung von Modulationssignalen zur Modulation von die genannten Zweige ansteuernden Steuersignalen umfassen,
welches Verfahren **dadurch gekennzeichnet ist, dass** es
- die Erkennung (41, 51, 54) eines Detektionssignals (23, 23A, 23B), welches eine Leitung abbildet, die von einem als Absolutwert gemessenen, höchsten oder zweithöchsten Strom durchflossen wird,
- die Auswahl (42, 52, 55) eines Modulationssignals (60, 60A, 60B) zur Durchführung einer Übermodulation (OM) sowie
- die Bestimmung (43, 53, 56) einer allgemeinen Steuerungssignalkomponente (OM, OM1, OM2) in Abhängigkeit von Signalen umfasst, die sich aus der Erkennung des genannten Detektionssignals (23, 23A, 23B) sowie der Auswahl eines Modulationssignals (60, 60A, 60B) ergeben.

12. Verfahren nach Anspruch 11, **dadurch gekennzeichnet, dass** es die Berechnung (44) von Grenzwerten (30, 31, 32) der allgemeinen Steuerungssignalkomponente (OM, OM1) bzw. der Übermodulation umfasst.

13. Verfahren nach Anspruch 12, **dadurch gekennzeichnet, dass** es die Steuerung (45) der Begrenzung der allgemeinen Steuerungssignalkomponente (OM) in Abhängigkeit von den genannten Grenzwerten (30, 31, 32) umfasst.

14. Verfahren nach irgendeinem der Ansprüche 11 bis 13, **dadurch gekennzeichnet, dass** es
- eine erste Erkennung (51) eines ersten Detektionssignals (23A), das eine Leitung abbildet, die von einem als Absolutwert gemessenen höchsten Strom durchflossen wird,
- eine erste Auswahl (52) eines Modulationssignals (60A) zur Durchführung einer Übermodulation,
- eine erste Bestimmung (53) einer ersten allgemeinen Steuerungssignalkomponente (OM1) in Abhängigkeit von Signalen (23A, 60A), die sich aus der ersten Erkennung eines ersten Detektionssignals und der ersten Auswahl eines Modulationssignals ergeben,
- eine zweite Erkennung (54) eines zweiten Detektionssignals (23A), das eine Leitung abbildet, die von einem als Absolutwert gemessenen hohen, unter dem ersten höchsten Strom liegenden Strom durchflossen wird,
- eine zweite Auswahl (55) eines Modulationssignals (60B) zur Durchführung einer Übermodulation sowie
- eine zweite Bestimmung (56) einer zweiten allgemeinen Steuerungssignalkomponente (OM2) in Abhängigkeit von Signalen (23B, 60B) umfasst, die sich aus der zweiten Erkennung eines zweiten Detektionssignals und der zweiten Auswahl eines Modulationssignals ergeben.

15. Verfahren nach Anspruch 14, **dadurch gekennzeichnet, dass** es
- die Berechnung (57) von Grenzwerten der allgemeinen Steuerungssignalkomponente oder der Übermodulation,
- die Steuerung (58) der Begrenzung der ersten allgemeinen Steuerungssignalkomponente zur Erkennung der Gefahr einer Überschreitung der Grenzwerte sowie
die Lieferung (59) eines Signals einer allgemeinen Steuerungssignalkomponente (OM) umfasst, welche die erste allgemeine Steuerungssignalkomponente (OM1) abbildet, wenn keine Gefahr einer Überschreitung erkannt wird, bzw. die zweite allgemeine Steuerungssignalkomponente (OM2) abbildet, wenn die Gefahr einer Überschreitung erkannt wird.
